# EUROPEAN PATENT APPLICATION

(11) **EP 2 063 092 A1**
(43) Date of publication of application: **27.05.2009**
(21) Application number: 07121147.8
(22) Date of filing: 20.11.2007
(51) Int. Cl.: F02D 41/30, F02D 41/00

(54) **An internal combustion engine system, and a method in such an engine system**

(71) Applicant: Ford Global Technologies, LLC, Dearborn, MI 48126 (US)
(72) Inventor: Otterspeer, Rob, 423 49 Torslanda (SE); Östberg, Claes, 463 34 Lilla Edet (SE)
(74) Representative: Holmberg, Magnus

(57) **Abstract**

The invention relates to an engine system, and a method in an engine system comprising an internal combustion engine having at least two cylinders (C1-C6) at each of which a piston (3), at least one inlet valve (5), at least one exhaust valve (7), and fuel injection means (11), for injection of fuel directly into the cylinder (C1-C6), are provided, the engine system also comprising an engine control unit (9). The engine control unit (9) is adapted to control the engine so as to operate in a homogenous charge compression ignition mode (HCCI) in at least one of the cylinders (C1-C3), and simultaneously operate in another ignition mode (SI) in at least one of the remaining cylinders (C4-C6).

## Description

### TECHNICAL FIELD

The present invention relates to an engine system comprising an internal combustion engine having at least two cylinders at each of which a piston, at least one inlet valve, at least one exhaust valve, and fuel injection means, for injection of fuel directly into the cylinder, are provided, the engine system also comprising an engine control unit. The invention also relates to a method in such an engine system.

### BACKGROUND

For internal combustion engines homogenous charge compression ignition (HCCI), allowing a mixture that has to have a relatively low fuel content, has a big potential in reducing the fuel consumption, compared to conventional homogenous mixture spark ignition operation. Also, HCCI produces considerably lower quantities of nitrogen oxides (NOx). However, in HCCI operation, the output torque of an engine can not be increased as easily as with said spark ignition operation, which is a problem especially in vehicle applications. In conventional homogenous mixture spark ignition operation the output torque is increased by increasing the air/fuel charge. At HCCI operation, with ignition occurring simultaneously at multiple places in the mixture, the heat release rate is much faster than at said spark ignition operation. Therefore, increasing the air/fuel charge might cause unacceptable NHV (Noise, Vibration and Harshness).

In the art of vehicle internal combustion engines, a common approach to said problems is simply to switch, at increased requested torques during normal operation, from HCCI operation to conventional said spark ignition operation, thereby loosing the benefits of HCCI.

A number of suggestions have been presented to extend the torque range of the HCCI operation. For example, so called boosted HCCI utilizes a special compressor for increasing the maximum torque limit, but results in a complicated and costly solution.

### SUMMARY OF THE INVENTION

It is an object of the invention to decrease fuel consumption of an internal combustion engine.

It is also an object of the invention to decrease fuel consumption at relatively high output torques of an internal combustion engine.

It is another object of the invention to increase the efficiency of an internal combustion engine at relatively high output torques thereof.

It is a further object of the invention to allow homogenous charge compression ignition at relatively high output torques of an internal combustion engine.

It is an additional object of the invention to decrease emissions at relatively high output torques of an internal combustion engine.

These objects are reached by an engine system of the type mentioned initially, wherein the engine control unit is adapted to control the engine so as to operate in a homogenous charge compression ignition mode in at least one of the cylinders, and simultaneously operate in another ignition mode in at least one of the remaining cylinders.

Here, "homogenous charge compression ignition mode" means, as is known to the person skilled in the art, a mode in which an entire air/fuel mixture in a cylinder, or at least a major portion of such a mixture, is combusted due to compression, which mixture is homogenous, or substantially homogenous. Thus, the combustion can be entirely caused by compression of the mixture due to the cylinder piston motion. Alternatively, a spark of a spark plug in the cylinder can be used for some minor stabilization of the combustion, the major portion of the combustion being caused by compression.

The invention allows for the other ignition mode to be such that it allows higher air/fuel charges or higher air/fuel ratios to meet torque demands, without the risk of excessive heat release rate and pre-ignition associated with higher air/fuel charges or higher air/fuel ratios at homogenous charge compression ignition (HCCI). Thus, the range of HCCI related operation can be extended. Therefore, advantages of HCCI, in particular efficiency increase, low fuel consumption, and low NOx emissions, can be benefited from while at the same time relatively high output torque requirements are met.

Operating an internal combustion engine on separate modes in different cylinders is known, for example from the patent publication US6321714B1, which suggests operating some cylinders in a stratified charge mode, and other cylinders in a homogenous charge spark ignition mode. However, the present invention provides great advantages over known art in that it allows efficiency, fuel consumption and emission benefits of the HCCI operation over a wider range of engine operating conditions.

Preferably, a spark ignition means is provided at each of the cylinders, and the other ignition mode is a spark ignition mode. Here, "spark ignition mode" means a mode in which an entire air/fuel mixture in a cylinder, or at least a major portion of such a mixture, is combusted due to one or more sparks of the spark ignition means, and preferably, the mixture is homogenous, or substantially homogenous. However, as is known to the person skilled in the art, at a spark ignition mode, the mixture could be stratified.

An operation according to the invention, wherein the engine is controlled so as to operate in a homogenous charge compression ignition mode in at least one of the cylinders, and simultaneously operate in another ignition mode in at least one of the remaining cylinders, can be maintained for as long as operational conditions allow and require it to be maintained. This means that said modes are carried out simultaneously over a plurality of consecutive engine events, such as cylinder firings or cycles. More specifically, the engine control unit can adapted to control the engine so as to operate in said ignition modes simultaneously during at least 720 crankshaft angles of the engine.

Preferably, the at least one of the cylinders which is operated in the homogenous charge compression ignition mode, and the at least one of the remaining cylinders which is operated in the other ignition mode, are adapted to an ignition sequence of the engine so that combustions of the engine are alternate combustions of the homogenous charge compression ignition mode and of the other ignition mode. The engine system could comprise a variable valve actuation system by means of which the actuation of at least the inlet valves can be adjusted, and the valve actuation system is adapted to adjust the valve actuation individually for a first group of cylinders and a second group of cylinders, wherein the cylinders are distributed alternately in an ignition sequence in the first group of cylinders and the second group of cylinders. The variable valve actuation system can for example be adapted to adjust the amount of valve lift, the duration of valve lift, the timing of valve lift and/or (e.g. in case of more than one intake valve per cylinder) the number of valves lifted. The variable valve actuation system can also be adapted to adjust the actuation of the exhaust valves.

This allows for the HCCI mode in cylinders of the first group, and the other ignition mode in the second group, and thereby, for combustions of the engine to be alternate combustions of the homogenous charge compression ignition mode and of the other ignition mode. Thereby, the ignition modes are adapted to the firing sequence of the engine so that after an HCCI combustion, the next combustion is a combustion of the other ignition mode, after which the next combustion is a HCCI combustion, and so on. Special characteristics of the homogenous charge compression ignition mode, differing from characteristics of other ignition modes, in particular the spark ignition mode, for example regarding the energy release rate during each combustion, and also pressures and temperatures, might cause abrupt changes in the behavior of the engine at combustions in one of the modes being followed by combustions of the other mode in other cylinders. In a vehicle in which the engine is provided, this will tend to increase NHV (Noise, Vibration and Harshness).

By alternating combustions of the homogenous charge compression ignition mode with combustions of the other ignition mode, so that during operation any pair of consecutive ignitions are of separate ignition modes, a maximum amount of changes of ignition modes will be provided. This means that there will be a maximum amount of changes of the engine behavior, which will be distributed evenly in time. Thereby, each "mode change" will take place close enough in time to the previous "mode change" to reduce or eliminate any increase of NHV that might result from the mix of ignition modes as outlined above.

Preferably, the engine control unit is adapted to control the engine so that a plurality of combustions in the at least one cylinder operating in the homogenous charge compression ignition mode give an output torque that is lower than a medium output torque, and so that a plurality of combustions in the at least one cylinder operating in the other ignition mode give an output torque that is higher than the medium output torque, so as for the engine to produce the medium output torque. Thereby, relatively high torque requirements can be met, while still benefiting from the low fuel consumption of the HCCI mode, and while avoiding excessive NHV in the HCCI mode. Specially, where the cylinders operated in a homogenous charge compression ignition mode, and the remaining cylinders operated in the other ignition mode, are the same in number, and are adapted to an ignition sequence of the engine so that combustions of the engine are alternate combustions of the homogenous charge compression ignition mode and of the other ignition mode, it is possible to produce high torques with low fuel consumption and low NHV. For example, HCCI mode combustions could produce 90 % of the medium output torque and combustions in the other mode could produce 110 % of the medium output torque.

Preferably, the engine system comprises a first and a second exhaust system portion, being adapted to receive exhaust gases from a first group of cylinders and a second group of cylinders, respectively, the engine control unit being adapted to control the engine so as to operate in the homogenous charge compression ignition mode in at least one of the cylinders of the first group of cylinders, and to simultaneously operate in the other ignition mode in at least one of the cylinders of the second group of cylinders. Thus, as exemplified below, separate first and second exhaust system portions can be provided, each comprising at least one catalytic converter, and gas sensors, so as for the exhaust treatment to be adapted for the ignition modes in the respective groups of cylinders.

It should be noted that preferably, said combustion modes can be carried out in any of the first and second group of cylinders. It is advantageous to allow the mixed combustion mode to be periodically adjusted so that during certain periods the first group of cylinders operate in the HCCI mode, and the second group of cylinders simultaneously operate in the other ignition mode, and so that during other periods the second group of cylinders operate in the HCCI mode, and the first group of cylinders simultaneously operate in the other ignition mode. This will allow exhaust gas treatment devices of the first and a second exhaust system portion to be subjected to similar cycles. In turn, this will provide similar wear characteristics of the exhaust gas treatment devices.

The objects are also reached with a method according to any of the claims 8-12.

### DESCRIPTION OF THE FIGURES

Below, the invention will be described in detail with reference to the drawings, in which
- fig. 1 shows a schematic view of parts of an engine system according to one embodiment of the invention,
- fig. 2 shows another schematic view of parts of the engine system,
- fig. 3 shows a further schematic view of parts of the engine system,
- fig. 4 is a diagram showing engine speed and requested torque parameters, and
- fig. 5 is a block diagram depicting steps in a method according to a preferred embodiment of the invention.

### DETAILED DESCRIPTION

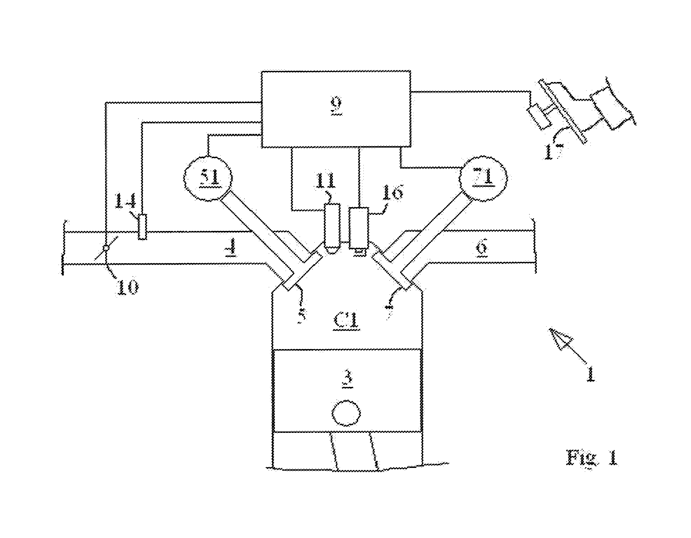

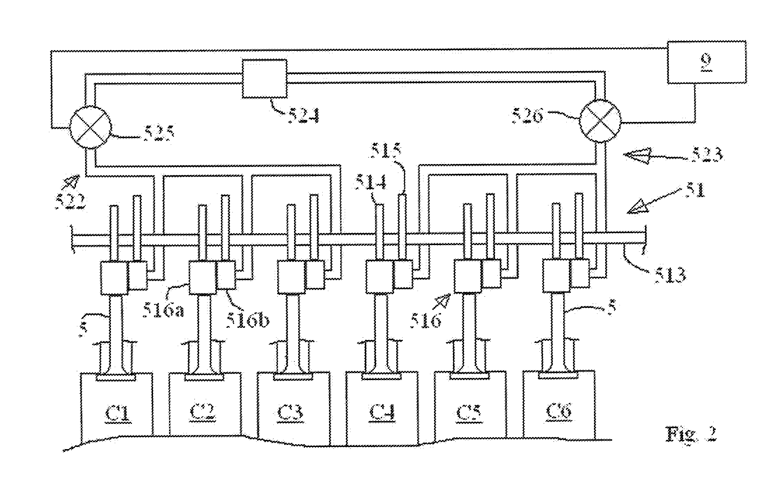

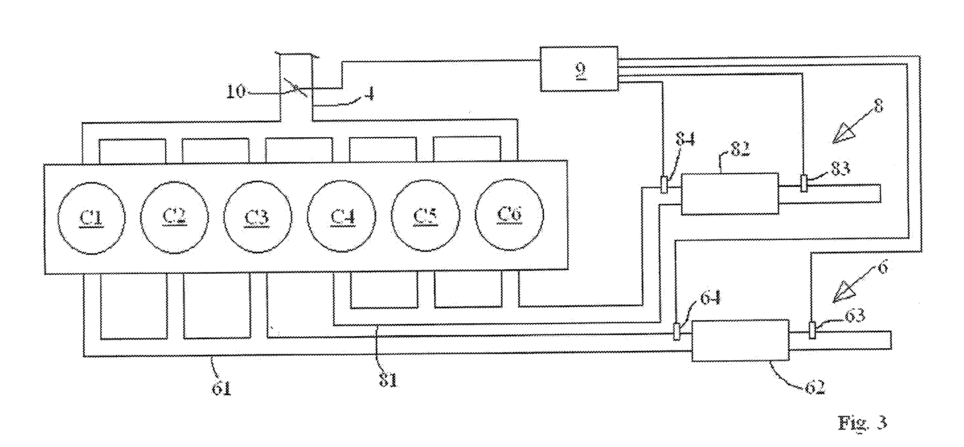

Fig. 1 shows a schematic view of parts of an engine system 1 comprising an internal combustion engine. As can be seen in fig. 2 and 3, reference to which is made below, the engine in this example comprises six cylinders arranged along a straight line, and in fig. 1, only one of the cylinders C1 is shown schematically with a reciprocating piston 3. At each cylinder, communication between the respective cylinder and an intake duct 4 is controlled by an inlet valve 5, and communication between the respective cylinder and an exhaust duct 6 of an exhaust system, described closer below, is controlled by an exhaust valve 7. Of course, two or more inlet valves 5 and/or two or more exhaust valves 7 can be provided at each cylinder, only one of each being shown in fig. 1 for simplicity of the presentation.

The engine system 1 also comprises an engine control unit (ECU) 9, which can be provided as one unit, or as more than one logically interconnected physical units.

The engine system comprises a variable valve actuation system 51, 71. The variable valve actuation system comprises an inlet valve actuation arrangement 51, described below with reference to fig. 2, and an exhaust valve actuation arrangement 71. The inlet valve actuation arrangement 51 and the exhaust valve actuation arrangement 71 are provided and controllable by the ECU 9 for controlling opening and closing timing, and the amount of lift of the inlet valves 5 and the exhaust valves 7.

The ECU 9 is adapted to control fuel injection means 11 comprising a fuel injector 11 at each cylinder C1-C6, adapted to inject fuel directly into the respective cylinder. The fuel injection means 11 communicate with fuel storage means in the form of a fuel tank, via a fuel pump, (not shown). The ECU 9 is also adapted to control air flow control means comprising a throttle valve 10 in the intake duct 4.

In addition, the ECU 9 is also adapted to determine the engine air flow based on signals received from an air flow sensor 14 located in the intake duct 4. As an alternative, as is known in the art, the air flow can be computed based on parameters such as the inlet manifold pressure, throttle position, engine speed, inlet temperature, and/or atmospheric pressure. Manners of determining the values of these parameters are known in the art, and not explained further here.

Further, at each cylinder, ignition means 16 comprising a spark plug 16 are provided and controllable by the ECU 9.

The ECU is also adapted to adjust, as known in the art, the value of a requested torque parameter based on signals from an accelerator pedal 17 in the vehicle, and adjust fuel and air supply to the cylinders at least partly based on the requested torque parameter value.

Fig. 2 shows another schematic view of parts of the engine system 1. Fig. 2 shows the six cylinders C1-C6 arranged along a straight line. For simplicity of this presentation, in fig. 2, nothing besides an inlet valve 5 is shown at each cylinder C1-C6. Fig. 2 also shows the inlet valve actuation arrangement 51, by means of which the inlet valves 5 are adapted to be actuated. Below, only the inlet valve actuation arrangement 51 is described in some detail, but it should be understood that the exhaust valve actuation arrangement 71, for the actuation of the exhaust valves 7 (fig. 1), is arranged in a manner corresponding to the inlet valve actuation arrangement 51.

The inlet valve actuation arrangement 51 includes a camshaft 513, and cam lobes 514, 515 on the camshaft 513. At each inlet valve 5, a tappet 516 is arranged between the camshaft 513 and the respective inlet valve 5. Each tappet 516 is adapted to transfer movements from the camshaft to the respective inlet valve 5.

Reference is made again to fig. 1. By suitable control of the fuel injection means 11, the ignition means 16, and the variable valve actuation system 51, 71 the operation in the cylinders C1-C6 can be controlled so as to include a homogenous charge compression ignition (HCCI) mode or a spark ignition (SI) mode.

As is known in itself in the art, in an SI mode, the fuel injection means 11, the ignition means 16, and the variable valve actuation system 51, 71 can be controlled as follows, (alternative SI modes being known in the art): At the end of an exhaust stroke of an operating cycle of a cylinder, and at or close to a top dead centre position of the piston 3, the exhaust valve 7 is controlled so as to close, and the inlet valve 5 is controlled so as to open. During the intake stroke the inlet valve 5 is open so as to introduce air into the cylinder, and at or close to the bottom dead centre position of the piston 3, the inlet valve 5 is closed. Thereafter, a fuel injection is performed, and subsequently, the ignition means 16 is controlled so as to ignite the mixture.

As is also known in itself in the art, in a HCCI mode, the fuel injection means 11, the ignition means 16, and the variable valve actuation system 51, 71 can be controlled as follows, (alternative HCCI modes being known in the art): At the end of an exhaust stroke of an operating cycle of a cylinder and at the beginning of the following intake stroke, the inlet and exhaust valves 5, 7 are controlled so as to form a negative valve overlap to capture main combustion residues. During the negative valve overlap a pilot fuel injection is performed. During the intake stroke the inlet valve 5 is opened so as to introduce air into the cylinder. During the compression stroke, i.e. after the bottom dead centre position of the piston 3, the inlet valve 5 is closed so as to control the effective compression ratio. After the closing of the inlet valve 5, a main combustion fuel injection is performed, and a compression ignited combustion of the mixture is allowed.

Reference is made again to fig. 2. The variable valve actuation system corresponds to a so called CPS (Cam Profile Shifting) system. Thereby, the engine is adapted to run in two valve lift modes, differing regarding the valve lift characteristics influencing the timing of, the duration of and/or the distance of the valve motion, i.e., the lift. Examples of alternative variable valve actuation systems are mentioned below. Here it should be noted that the invention is also applicable to engines adapted to run in more than two valve lift modes. The inlet valve actuation arrangement 51 includes actuation adjustment mechanisms (not shown), each arranged at a tappet 516. Each actuation adjustment mechanism is adapted to adjust the respective tappet 516 so as to effect shifts from one valve lift mode to another.

The inlet valve actuation arrangement 51 includes for each valve 5 a low lift cam lobe 514, and a high lift cam lobe 515, on the camshaft 513. The high lift cam lobe 515 has a larger eccentric than the low lift cam lobe 514. The high lift cam lobe 515 can also, or alternatively, have a different profile than the low lift cam lobe 514 so as to provide for different valve lift characteristics during parts or the whole lifting process, and also a different duration and/or timing of lifting process.

Each tappet 516 comprises two parts, a main part 516a and an additional part, herein referred to as a high lift part 516b, whereby the high lift part 516b is movable in relation to the main part 516a in direction perpendicular to the camshaft 513, and biased towards the camshaft by means of a spring (not shown). The actuation adjustment mechanism can assume a first position in which a low lift mode can be effected. This low lift valve mode is used for the HCCI mode.

In the low lift mode, the main part 516a and the high lift part 516b of the tappet 516 are not fixed to each other. Thereby, the low lift cam lobe 514 pushes the tappet 516 and the inlet valve 5, at which the high lift cam lobe 515 pushes the high lift part 516b along the main part 516a, without acting on the inlet valve 5.

The inlet valve actuation arrangement 51 includes a hydraulic system 522, 523, 524, 525, 526, described further below. By means of adjusting the hydraulic pressure in the hydraulic system, the actuation adjustment mechanism can be actuated so as to lock the high lift part 516b to the main part 516a, in order to effect a high lift mode. In the high lift mode, the high lift cam lobe 515 acts on the inlet valve 5 via the high lift part 516b and the main part 516a. This high lift valve mode is used for the SI mode.

By means of adjusting the hydraulic pressure in the hydraulic system 522, 523, 524, 525, 526, the actuation adjustment mechanism can be actuated so as to unlock the high lift part 516b from the main part 516a, in order to effect the low lift mode.

The hydraulic system comprises a first mechanism control system 522, and a second mechanism control system 523, both adapted to be pressurized by a common hydraulic pump 524. Alternatively, the first mechanism control system 522 and the second mechanism control system 523 could be respective parts of two separate hydraulic systems.

Each mechanism control system 522, 523 communicates with the actuation adjustment mechanisms at tappets 516 at a respective group of the cylinders. The first mechanism control system 522 and the second mechanism control system 523 include a first 525 and a second control valve 526, respectively, to control the pressure at the tappets 516. The first and second control valves 525, 526 are solenoid valves controllable through signals from the ECU 9.

The groups of cylinders C1-C3, C4-C6 are arranged in view of the ignition sequence of the engine. In this example the ignition sequence, or firing order, of the engine in a four-stroke mode is 1-5-3-6-2-4, which is a standard sequence for inline six cylinder engines. For the sake of clarity: this ignition sequence means that the cylinders are subjects to combustion in the order C1-C5-C3-C6-C2-C4. A first group of cylinders, controllable through the first mechanism control system 22, includes three cylinders C1-C3 closest to a first end of the row of cylinders, and a second group of cylinders, controllable through the second mechanism control system 23, includes the remaining three cylinders C4-C6 closest to a second end of the row of cylinders. This means that each combustion in a cylinder of the first group of cylinders C1-C3 is preceded, without any intermediate combustion, by a combustion in a cylinder of the second group C4-C6, and also followed, without any intermediate combustion, by a combustion in a cylinder of the second group C4-C6. Of course, similarly, each combustion in a cylinder of the second group of cylinders C4-C6 is preceded, without any intermediate combustion, by a combustion in a cylinder of the first group C1-C3, and also followed, without any intermediate combustion, by a combustion in a cylinder of the first group C1-C3. In other words, combustions of the engine are alternately in a cylinder of the first group, and a cylinder of the second group. As mentioned above, this is advantageous when the cylinders C1-C3 of one of the groups are operated in the HCCI mode, and the cylinders C4-C6 of the other group are operated in the SI mode.

Reference is made to fig. 3. Downstream from the cylinders C1-C6, an exhaust system 6, 8 is provided, comprising a first and a second exhaust system portion 6, 8. The first group of cylinders C1-C3 communicates with a first exhaust duct 61 of the first exhaust system portion 6, and the second group of cylinders C4-C6 communicates with a second exhaust duct 81 of the second exhaust system portion 8. In each exhaust system portion 6, 8, downstream of the respective exhaust ducts 61, 81, a respective exhaust gas treatment device 62, 82, in the form of a catalytic converter, is provided. The ECU 9 is adapted to receive signals from a respective downstream gas sensor 63, 83 located downstream of the respective catalytic converter 62, 82, as well as from a respective upstream gas sensor 64, 84 located in the respective exhaust duct 61, 81 between the cylinders in the respective cylinder groups, and the respective catalytic converter 62, 82. Thereby, the ECU 9 is adapted to determine, based on the signals from the gas sensors 63, 83, 64, 84, the oxygen content in the exhaust gases upstream and downstream, respectively, of the respective catalytic converters 62, 82.

The separate first and second exhaust system portions 6, 8, being adapted to receive exhaust gases from the first and second group of cylinders, respectively, provides for the exhaust gas treatment processes being controlled individually for the first and second group of cylinders. This provides for an effective exhaust control when the cylinders C1-C3 of one of the groups are operated in the HCCI mode, and the cylinders C4-C6 of the other group are operated in the SI mode.

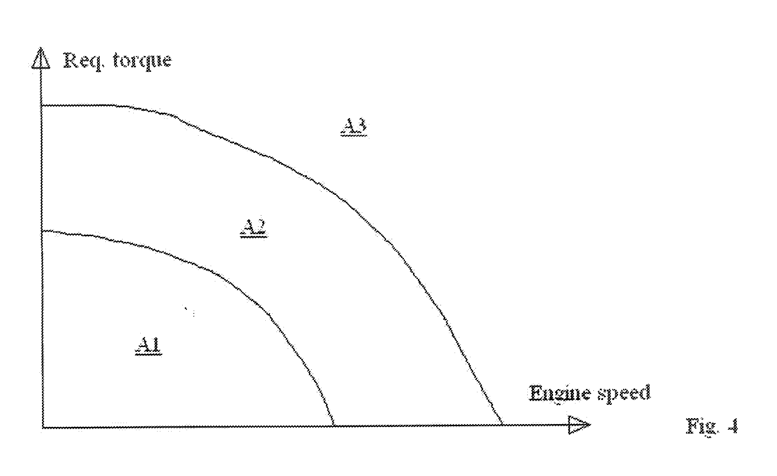

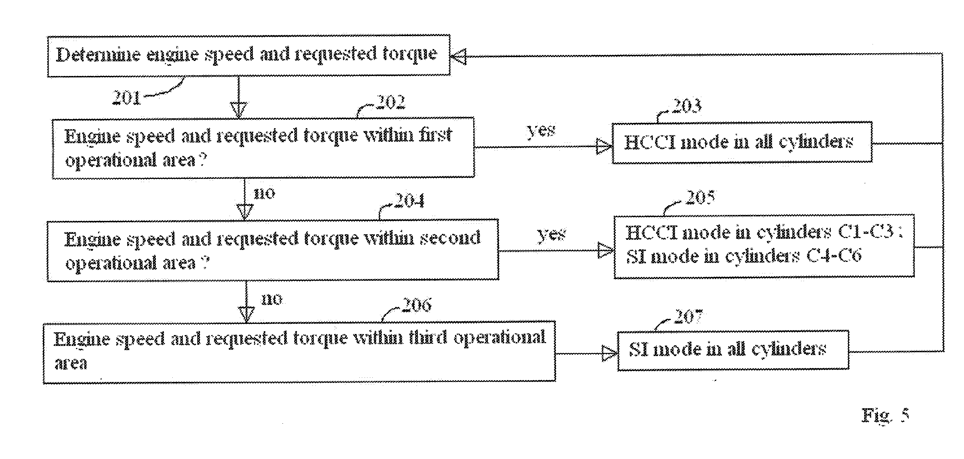

With reference to fig. 4 and fig 5, a method according to a preferred embodiment of the invention will be described. Fig. 4 shows a diagram mapping engine speed and requested torque, and these two parameters are used to define three operational areas A1, A2, A3 of the engine. Information defining such operational areas A1, A2, A3 is stored accessible to the ECU 9. A first operational area A1 includes relatively low engine speeds and requested torques. A second operational area A2 includes engine speeds that are higher than the engine speeds of the first operational area A1 and/or requested torques that are higher than the requested torques of the first operational area A1. A third operational area A3 includes engine speeds that are higher than the engine speeds of the second operational area A2 and/or requested torques that are higher than the requested torques of the second operational area A2.

Fig. 5 shows steps in the method, including the ECU 9 determining 201 the engine speed and requested torque. If the ECU determines 202 that the engine speed and the requested torque are within the first operational area A1. the fuel injection means 11, the ignition means 16, and the variable valve actuation system 51, 71 are controlled 203 so as to operate all cylinders C1-C6 in the HCCI mode. If the ECU determines 204 that the engine speed and the requested torque are within the second operational area A2, the fuel injection means 11, the ignition means 16, and the variable valve actuation system 51, 71 are controlled 205 so as to operate the cylinders in a mixed combustion mode, in which the cylinders C1-C3 in the first group are operated in the HCCI mode, and the cylinders C4-C6 in the second group are operated in the SI mode.

During the mixed combustion mode, the ECU 9 controls the combustions so that the combustions in the cylinders C1-C3 in the first group operating in the HCCI mode give an output torque that is lower than the requested torque, and the combustions in the cylinders C4-C6 in the second group operating in the SI mode give an output torque that is higher than the requested output torque, so as for the engine to produce the requested torque. Thereby, the requested torque is a medium value, herein also referred to as a medium output torque, of the output torque produced by combustions in the HCCI mode and the output torque produced by combustions in the SI mode.

The mixed combustion mode is periodically adjusted so that during certain periods the cylinders CI-C3 in the first group operate in the HCCI mode, and the cylinders C4-C6 in the second group simultaneously operate in the SI mode, and so that during other periods the cylinders C4-C6 in the second group operate in the HCCI mode, and the cylinders C1-C3 in the first group simultaneously operate in the other ignition mode. This will allow exhaust gas treatment devices of the first and a second exhaust system portion to be subjected to similar cycles.

If the ECU determines 206 that the engine speed and the requested torque are within the third operational area A3, the fuel injection means 11, the ignition means 16, and the variable valve actuation system 51, 71 are controlled 207 so as to operate all cylinders C1-C6 in the SI mode. The engine speed and requested torque are repetitively determined 201 in order to determine in said manner whether the cylinders are to remain in their respective ignition modes, or whether an ignition mode switch is to be effected in any, some or all cylinders.

Of course, alternatives are possible to the method described with reference to fig. 4 and fig. 5. For example, instead of the requested torque, the determinations regarding the ignition modes can be based partly on the engine load, determined in a manner known per se in the art.

It should also be mentioned that in alternative embodiments, the engine can be controlled so that the amount of cylinders which are operated in the HCCI mode can be larger than the amount of cylinders which are operated in the SI mode, or vice versa.

For the variable valve actuation system 51, 71, a number of alternatives can be used. For example, the variable valve actuation system 51, 71 can comprise a variable valve timing (VVT) system, in addition to, or as an alternative to the cam profile shifting system. Alternatively, the variable valve actuation system 51, 71 can comprise electron-magnetically, pneumatically or clectro-hydraulically driven actuators for individual control of the respective valves 5, 7, i.e. independently of the engine crankshaft. Regardless of the type of variable valve actuation system 51, 71 used, preferably, it is adapted to change the duration of valve lift, i.e. the time from valve opening to valve closing.

Above, the engine described is an inline six-cylinder engine. However, the invention is also applicable to engines with different configurations, for example inline four or five cylinder engines, or V-8 engines. Preferably, in any case, a variable valve actuation system is provided and adapted as described above to a first and a second group of cylinders, the cylinders being distributed alternately in an ignition sequence in the first and second group. Also, preferably, in any case the engine has a divided exhaust system as described above, with system a first and a second exhaust system portion 6, 8, being adapted to receive exhaust gases from a first group of cylinders C1-C3 and a second group of cylinders C4-C6, respectively.

As an alternative, the invention can be used for controlling a diesel engine so as to operate in a HCCI mode in at least one of the cylinders, and simultaneously operate in a diesel mode in the remaining cylinder(s).

## Claims

1. An engine system comprising an internal combustion engine having at least two cylinders (C1-C6) at each of which a piston (3), at least one inlet valve (5), at least one exhaust valve (7), and fuel injection means (11), for injection of fuel directly into the cylinder (C1-C6), are provided, the engine system also comprising an engine control unit (9), **characterized in that** the engine control unit (9) is adapted to control the engine so as to operate in a homogenous charge compression ignition mode (HCCI) in at least one of the cylinders (C1-C3), and simultaneously operate in another ignition mode (SI) in at least one of the remaining cylinders (C4-C6).

2. An engine system according to claim 1, wherein a spark ignition means (16) is provided at each of the cylinders (C1-C6), and the other ignition mode is a spark ignition mode (SI).

3. An engine system according to any of the preceding claims, wherein the engine control unit (9) is adapted to control the engine so as to operate in said ignition modes (HCCI, SI) simultaneously during at least 720 crankshaft angles of the engine.

4. An engine system according to any of the preceding claims, wherein the at least one of the cylinders (C1-C3) which is operated in the homogenous charge compression ignition mode (HCCI), and the at least one of the remaining cylinders (C4-C6) which is operated in the other ignition mode (SI), are adapted to an ignition sequence (1-5-3-6-2-4) of the engine so that combustions of the engine are alternate combustions of the homogenous charge compression ignition mode (HCCI) and of the other ignition mode (SI).

5. An engine system according to any of the preceding claims, wherein the engine system comprises a variable valve actuation system (51, 71) by means of which the actuation of at least the inlet valves (5) can be adjusted, and the valve actuation system (51, 71) is adapted to adjust the valve actuation individually for a first group of cylinders (C1-C3) and a second group of cylinders (C4-C6), wherein the cylinders (C1-C6) are distributed alternately in an ignition sequence (1-5-3-6-2-4) in the first group of cylinders (C1-C3) and the second group of cylinders (C4-C6).

6. An engine system according to any of the preceding claims, wherein the engine control unit (9) is adapted to control the engine so that a plurality of combustions in the at least one cylinder (C1-C3) operating in the homogenous charge compression ignition mode (HCCI) give an output torque that is lower than a medium output torque, and so that a plurality of combustions in the at least one cylinder (C4-C6) operating in the other ignition mode (SI) give an output torque that is higher than the medium output torque, so as for the engine to produce the medium output torque.

7. An engine system according to any of the preceding claims, wherein the engine system comprises a first and a second exhaust system portion (6, 8), being adapted to receive exhaust gases from a first group of cylinders (C1-C3) and a second group of cylinders (C4-C6), respectively, the engine control unit (9) being adapted to control the engine so as to operate in the homogenous charge compression ignition mode (HCCI) in at least one of the cylinders of the first group of cylinders (C1-C3), and to simultaneously operate in the other ignition mode (SI) in at least one of the cylinders of the second group of cylinders (C4-C6).

8. A method in an engine system comprising an internal combustion engine having at least two cylinders (C1-C6) at each of which a piston (3), at least one inlet valve (5), at least one exhaust valve (7), and fuel injection means (11), for injection of fuel directly into the cylinder (C1-C6), are provided, **characterized in** controlling the engine so as to operate in a homogenous charge compression ignition mode (HCCI) in at least one of the cylinders (C1-C3), and simultaneously operate in another ignition mode (SI) in at least one of the remaining cylinders (C4-C6).

9. A method according to claim 8, wherein a spark ignition means (16) is provided at each of the cylinders, and the other ignition mode is a spark ignition mode (SI).

10. A method according to any one of the claims 8-9, wherein said ignition modes (HCCI, SI) are carried out simultaneously during at least 720 crankshaft angles of the engine.

11. A method according to any one of the claims 8-10, wherein the at least one of the cylinders (C1-C3) operated in the homogenous charge compression ignition mode (HCCI), and the at least one of the remaining cylinders (C4-C6) operated in the other ignition mode (SI), are adapted to an ignition sequence (1-5-3-6-2-4) of the engine so that combustions of the engine are alternate combustions of the homogenous charge compression ignition mode (HCCI) and of the other ignition mode (SI).

12. A method according to any one of the claims 8-11, wherein a plurality of combustions in the at least one cylinder (C1-C3) operating in the homogenous charge compression ignition mode (HCCI) give an output torque that is lower than a medium output torque, and a plurality of combustions in the at least one cylinder (C4-C6) operating in the other ignition mode (SI) give an output torque that is higher than a medium output torque, so as for the engine to produce the medium output torque.
